(19) Europäisches Patentamt

European Patent Office

Office européen des brevets

(11) **EP 0 540 833 B1**

(12) **EUROPÄISCHE PATENTSCHRIFT**

(45) Veröffentlichungstag und Bekanntmachung des Hinweises auf die Patenterteilung:
**23.04.1997 Patentblatt 1997/17**

(51) Int Cl.⁶: **G06T 7/00**, B41F 33/00, G01N 21/89

(21) Anmeldenummer: **92113521.6**

(22) Anmeldetag: **07.08.1992**

(54) **Qualitätskontrolle einer Bildvorlage z. B. eines gedruckten Musters**

Quality control of an image, for example a printed pattern

Contrôle de qualité d'une image, par exemple un modèle imprimé

(84) Benannte Vertragsstaaten:
**CH DE FR GB IT LI SE**

(30) Priorität: **12.08.1991 DE 4126582**
        **20.12.1991 DE 4142481**

(43) Veröffentlichungstag der Anmeldung:
**12.05.1993 Patentblatt 1993/19**

(73) Patentinhaber: **KOENIG & BAUER-ALBERT AKTIENGESELLSCHAFT**
**97080 Würzburg (DE)**

(72) Erfinder:
• **Bolza-Schünemann, Claus August**
**W-8700 Würzburg (DE)**
• **Schaede, Johannes Georg**
**W-8700 Würzburg (DE)**

(56) Entgegenhaltungen:
**EP-A- 0 159 880**

• **RESEARCH DISCLOSURE Bd. 324, Nr. 85, April 1991, HAVANT GB Seite 275 , XP170399 ANONYMOUS 'image analysis algorithm' ***
• **PATTERN RECOGNITION Bd. 22, Nr. 4, 1989, ELMSFORD, NY US Seiten 367 - 380 SOBEY ET AL. 'detection and sizing visual features in wood' ***
• **PATENT ABSTRACTS OF JAPAN vol. 14, no. 580 (E-1017)25. Dezember 1990 & JP A 2252392**
• **PATENT ABSTRACTS OF JAPAN vol. 9, no. 285 12. November 1985 & JP A 60124783**

## Beschreibung

Die Erfindung betrifft ein Verfahren zur Durchführung eines Druckes gemäß dem Patentanspruch 1.

Eine Vorrichtung zur qualitativen Beurteilung von bedruckten Bogen ist z. B. durch die EP-01 94 331 A1 bekanntgeworden.

Druckvorlagen werden seit langem auf Druckqualität überprüft. Diese Überprüfung bezieht sich in der Regel auf die Messung von Farbdichtewerten in speziell dafür eingerichteten Meßfeldern, Registerabweichungen durch Messung spezieller Registerfehler und Kontrastmarken zur Ermittlung von Punktzuwachs und Kontrast. Eine elektronische Qualitätskontrolle über den gesamten Druckbogen konnte lange nicht durchgeführt werden. Seit einigen Jahren sind am Markt mit Hilfe von Bildaufnahmegeräten Überwachungseinrichtungen möglich, die einen Druckbogen oder einen Ausschnitt eines Druckbogens als stehendes Bild auf einen Monitor projizieren, so daß eine Online-Kontrolle der Druckvorlage durch den Drucker möglich ist.

Diese Bildvorlage wurde in einem Bildspeicher abgelegt, so daß ein stillstehendes Bild betrachtet werden konnte. Sobald dieses Bild vorhanden war, lag es nahe, alle weiteren Bilder, die die Maschine permanent produziert, mit dieser Vorlage im Bildspeicher zu vergleichen und etwaige Abweichungen zu signalisieren. Dieses Verfahren ist also bereits bekannt.

Der Erfindung liegt die Aufgabe zugrunde, ein Verfahren zur Kontrolle von bedruckten Bogen zu schaffen, bei dem das Ergebnis der Qualitätskontrolle durch eine opto / elektronische Vorrichtung weitgehend dem Ergebnis durch eine geschulte Prüfperson gleicht.

Die mit der Erfindung erzielbaren Vorteile bestehen insbesondere darin, daß die Anzahl der eingesetzten geschulten Prüfpersonen vermindert werden kann, ohne daß die Qualität der für gut befundenen Bogen vermindert wird. Prüfpersonen werden von dieser sehr anstrengenden Prüfarbeit, die immer wieder durch Erholungspausen unterbrochen werden muß, entlastet. Es ist ferner möglich, zulässige Registerschwankungen oder andere Abweichungen bei der Qualitätsprüfung zu berücksichtigen. Das Verfahren kann u. a. sowohl bei Rollen- als auch bei Bogenrotationsdruckmaschinen Anwendung finden.

Das erfindungsgemäße Verfahren wird nachfolgend beschrieben.

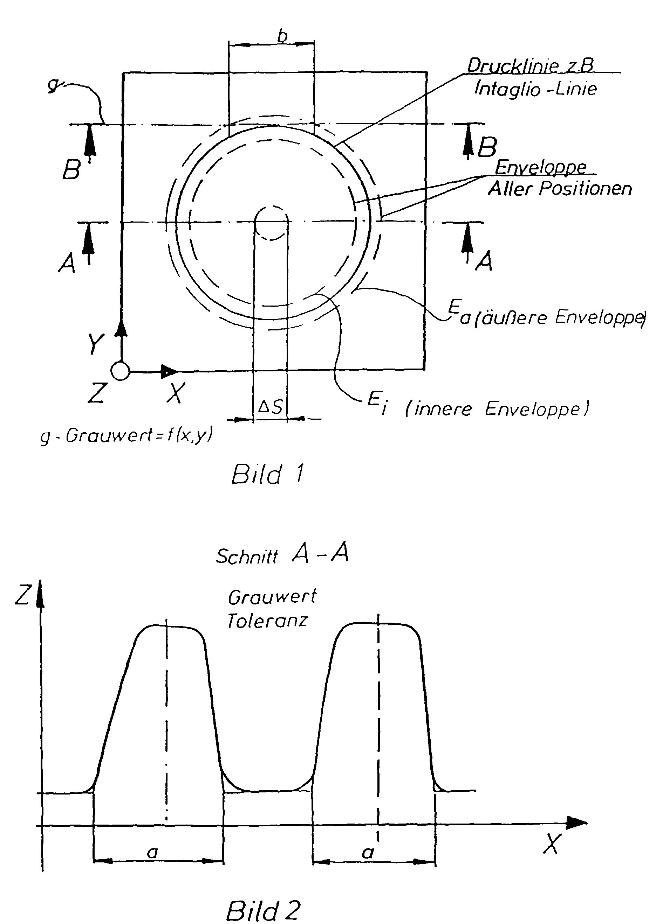

Die Bilder 1 bis 4 zeigen die Zusammenhänge zwischen einem Druckmuster (Kreis) und den dazugehörigen Grauwerten, gesehen in x-, y- und z-Achse.

Um einen fehlerfreien Bildvergleich vornehmen zu können, ist es unerläßlich, daß im Bildspeicher abgelegte Original ('Master') in x- sowie y-Koordinaten für jedes einzelne Bildelement (ein oder mehrere Pixel) auf die zu prüfende Bildvorlage zu positionieren.

Diese Übereinstimmung zwischen zu prüfendem Bild und 'Master'-Bild ist für die qualitative Aussage absolut notwendig, da pro Bildelement nur der Farbdichtewert, z. B. auch der Grauwert, als zu vergleichende Größe vorliegt.

Um einen Fehler detektieren zu können, wird eine Fehlerschwelle definiert, die bei Überschreitung der Soll/Istdifferenz pro Bildelement Fehler innerhalb dieses Bildelementes signalisiert. Dieses Verfahren zeigte sich jedoch in der Praxis als unbrauchbar, da eine exakte Übereinstimmung der einzelnen Bildelemente zwischen Master und Vorlage z. B. aufgrund von Deformationen im Druckträger nicht gewährleistet werden konnte.
Die Verschiebung von zu bewertenden Bildelementen untereinander bedingte eine große Soll/Istabweichung zur Auslösung eines Fehlers. Somit mußten jedoch Unzulänglichkeiten bei der Erkennung von Fehlern hingenommen werden, die insbesondere die Eigenschaften des menschlichen Auges in keiner Weise widerspiegelten.

Versuche haben erwiesen, daß das Auffinden von Fehlern im Druckbild durch visuelle Betrachtung subjektiv erfolgt. Bei der Betrachtung von homogenen Flächen (beispielsweise unbedruckte Stellen) agiert das menschliche Auge mit höchster Sensibilität bei der Fehlererkennung. Kleinste Unregelmäßigkeiten werden dort unverzüglich erkannt, während gleiche Unregelmäßigkeiten innerhalb von bedruckten Stellen schlechter erkannt werden. Diese Eigenschaft des menschlichen Auges und Gehirns bei der Fehlerbewertung soll beim Bildvergleich der Qualitätskontrolle nach dem erfindungsgemäßen Verfahren weitestgehendst verwirklicht werden.

Lagefehler des zu bewertenden Musters erfordern große Grauwerttoleranzen - typisch ist z. B. der Stahlstichdruck - aber dennoch sollen relativ kleine Fehler erkannt werden.

So bleibt - z. B. im Stahlstichdruck - dem auszuwertenden Muster - z. B. eine Linie auf dem Druckträger - nicht exakt an der Soll-Stelle auf dem Druckträger (Bogen oder Bahn) im Laufe der Druckauflage (= Anzahl der Exemplare) sondern bewegt sich in einem zulässigen Toleranzbereich als gutes Druckexemplar oder darüber hinaus, dann aber ist es ein Makulaturexemplar.

Sichere Aussagen:
1. Im Bereich "a", "b" ist eine kontrastreiche gedruckte Linie z. B. Stahlstich-Linie zu erwarten.

1.1 Der Mittelwert des Grauwertes im Bereich "a", "b" muß in engen Grenzen für alle Proben der gleichen Positioniertoleranz (= Grauwerttoleranz $\Delta g_H$) stimmen.
1.1 Begründung:

Vergrößerung des Bereiches "a":

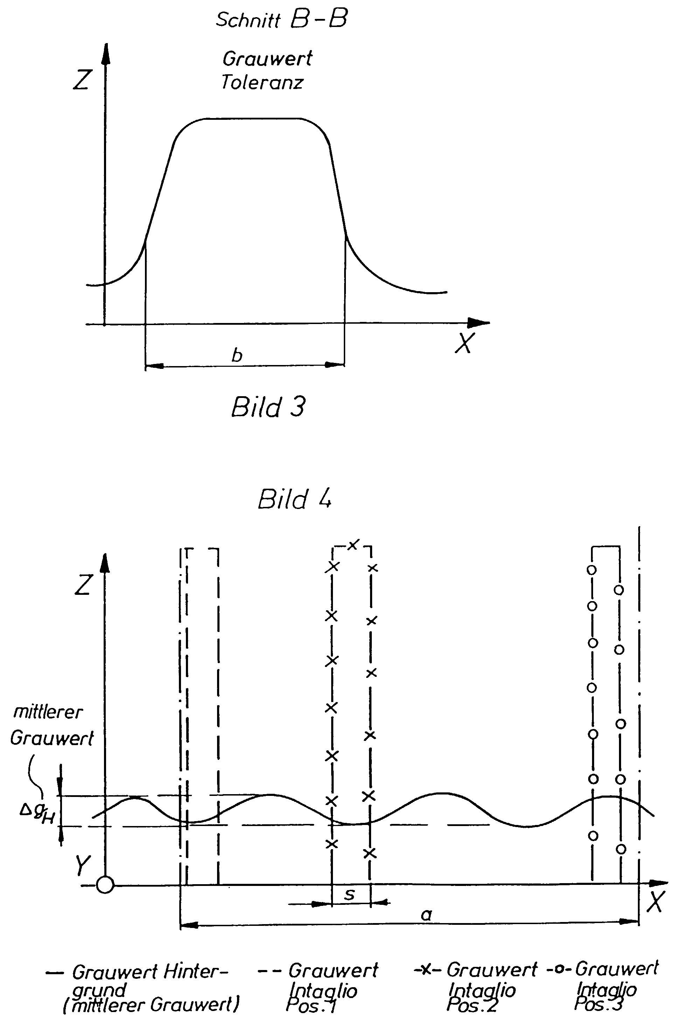

Verschiedene Positionen der gedruckten Linie z. B. Intagliolinie im Bereich "a" (Bild 4):

$$\text{Maximale Mittelwertschwankung} = \frac{\Delta g_H \cdot S}{a}$$

Für Fall "b" (Bild 1 und Bild 3) muß die Tiefe y d. h.

Schnittpunkte einer Geraden g mit der äußeren Enveloppe $E_a$ für die Mittelwertbildung größer sein als für Fall "a".

Abweichungen im Mittelwert bedeuten: Fehlende Kontrast-Linie z. B. gedruckte Linie (Ausbrechen) oder zuviel Kontrast z. B. Druckfarbe (Schmierer), was häufig vorkommt.

1.2 Die Varianz im Bereich "a", "b" muß für wenigstens eine Bildzelle eine gewisse Schwelle erreichen.

Begründung:    Eine farbschwache, verschmierte Intagliolinie würde bei Mittelwertbildung nicht entdeckt.

Ferner:    Bei Erreichen der Varianzschwelle können Bereiche mit falschem Mittelwert (bei z. B. fester Tiefe y für die Mittelwertbildung) noch als gut gewertet werden (große Wahrscheinlichkeit).

Durch das sog. "Schneegebirgeauswerteverfahren", das in der DE-Patentanmeldung P 41 26 582.3 beschrieben ist, und auf das ausdrücklich bezuggenommen wird, werden Gebiete mit großer Toleranz ("Schneedecke" groß) unempfindlicher auf Abweichungen vom Original. Auch in bestimmten außerordentlichen Fällen (Sicherheitsfäden, Fuseln, einzelne Linien mit größeren Abweichungen) ist es jedoch notwendig, trotzdem eine Aussage über das Druckbild zu machen.

Bild 1    zeigt als Beispiel einen Kreis (z. B. in Stahlstich gedruckt) mit einer Toleranz der Position $\Delta S$ und den Enveloppen $E_a$, $E_i$ aller möglichen Postionen, sowie Schnitte durch die Grauwerttoleranz.

Der Erfindung liegt daher die Aufgabe zugrunde, innerhalb der Positionsenveloppen Aussagen über das vorhandensein der kontrastreichen (Intaglio-)Linien zu machen.

Erfindungsgemäß wird diese Aufgabe durch das Verfahren nach Anspruch 1 gelöst.

Dies kann z. B. dadurch geschehen, daß für jedes Bildelement, wobei die Größe des Bildelementes nicht notwendig identisch mit denen des "Schneegebirges" sein muß, eine Varianz und ein Mittelwert zugeordnet wird, dessen obere und untere Schwelle durch die Extremwerte der Musterbogen ermittelt wird. Dadurch entsteht ein Toleranzfeld ("Schneegebirge") der Mittelwerte und Varianzen.

## Patentansprüche

1. Verfahren zur Durchführung einer Qualitätskontrolle eines Druckes, z.B. eines gedruckten Musters, bei dem an Drucken Grauwerte gemessen werden und es Gebiete gibt, in denen wegen zulässiger Lageschwankungen unterschiedliche Grauwerte an entsprechenden Positionen auftreten, wobei die unterschiedlichen Grauwerte aufgrund eines kontrastreichen Druckelementes große Wertunterschiede aufzeigen, und bei dem zur Bewertung der Druckqualität eines jeweiligen Druckes der Mittelwert und/oder die Varianz der in diesen Gebieten an dem jeweiligen Druck gemessenen Grauwerte herangezogen wird/werden.

2. Verfahren nach Patentanspruch 1, dadurch gekennzeichnet, daß dem Mittelwert und der Varianz jeweils eine Toleranz zugeordnet werden.

3. Verfahren nach den Patentansprüchen 1 und 2, dadurch gekennzeichnet, daß die Gebiete Flächenelemente des Druckes sind.

## Claims

1. A process for carrying out a quality control of a printed product, for example a printed pattern, in which grey scale values are measured on printed products and there are regions in which, because of permissible fluctuations in position, different grey scale values occur at corresponding positions, the different grey scale values indicating, because of a high-contrast print element, large differences in value, and in which, to assess the print quality of a respective print product, the average value and/or the variance of the grey scale values' measured on the respective printed product in these regions is/are used.

2. A process according to Claim 1, characterized in that a tolerance is associated in each case with the average value and the variance.

3. A process according to Claims 1 and 2, characterized in that the regions are surface elements of the printed product.

## Revendications

1. Procédé pour la mise en oeuvre d'un contrôle de qualité d'un imprimé, par exemple d'un modèle imprimé, selon lequel on mesure sur des imprimés des valeurs de gris, selon lequel il y a des zones dans lesquelles, à cause des variations admissibles de positions, différentes valeurs de gris apparaissent en différentes positions, les différentes valeurs de gris présentant de grandes différences de valeurs en raison d'un élément imprimé à grand contraste, et selon lequel on exploite, pour évaluer la qualité d'impression d'un imprimé considéré, la moyenne et/ou la variance des valeurs de gris mesurées dans ces zones sur l'imprimé considéré.

2.  Procédé selon la revendication 1, caractérisé en ce que l'on associe à chaque fois une tolérance à la moyenne et à la variance.

3.  Procédé selon les revendications 1 et 2, caractérisé en ce que les zones sont des éléments de surface de l'imprimé.

b

g

Drucklinie z.B
Intaglio -Linie

B

Enveloppe
Aller Positionen

A

$E_a$ (äußere Enveloppe)

Y

Z    X

$E_i$ (innere Enveloppe)

ΔS

g - Grauwert = f(x,y)

## Bild 1

Schnitt $A-A$

Z

Grauwert
Toleranz

a          a          X

## Bild 2

Schnitt $B-B$

Grauwert
Toleranz

Bild 3

Bild 4

— Grauwert Hintergrund
(mittlerer Grauwert)

-- Grauwert
Intaglio
Pos.1

-x- Grauwert
Intaglio
Pos.2

-o- Grauwert
Intaglio
Pos.3